# EUROPÄISCHE PATENTSCHRIFT

(11) **EP 2 529 955 B1**
(45) Veröffentlichungstag und Bekanntmachung des Hinweises auf die Patenterteilung: **29.04.2015**
(21) Anmeldenummer: 12168629.9
(22) Anmeldetag: 21.05.2012
(51) Int. Cl.: B60C 13/00, B60C 19/00

(54) **Fahrzeugluftreifen**
Pneumatic vehicle tyre
Pneu de véhicule

(30) Priorität: 30.05.2011 DE 102011050704
(43) Veröffentlichungstag der Anmeldung: 05.12.2012
(73) Patentinhaber: Continental Reifen Deutschland GmbH, 30165 Hannover (DE)
(72) Erfinder: Rutsch, Peter, 37075 Göttingen (DE)

(56) Entgegenhaltungen:
- EP-A2- 1 190 872
- WO-A1-97/50100
- DE-U1- 20 305 502

## Beschreibung

Die Erfindung betrifft einen schlauchlosen Fahrzeugluftreifen mit einem Laufstreifen, Wulstbereichen und Seitenwänden, vorgesehen zur Montage auf einer mit einem Ventil versehenen Felge und an Kraftfahrzeugen mit vier Radpositionen.

Es ist bekannt und üblich, die Seitenwände eines Fahrzeugluftreifens mit Beschriftungen und Dekorelementen zu versehen, welche insbesondere bei der Vulkanisation des Reifens in einer Vulkanisationsform in die Seitenwände eingeprägt werden und derart im fertigen Reifen als Erhebungen und Vertiefungen ausgebildet sind. Mit dem Anbringen und der Ausführung von Dekorelementen und Beschriftungen an Seitenwänden von Fahrzeugluftreifen befasst sich eine Vielzahl von Patentveröffentlichungen, beispielsweise die WO 00/13922 A1, die EP 0 751 014 A2 und die US 5,807,446 A. Es ist ferner auch bekannt, am fertigen Fahrzeugluftreifen Kunststoff- oder Gummidekorelemente durch Kleben anzubringen, beispielsweise ist es aus der US 2011/0079332 A1 bekannt, Designelemente aus PVC an den Reifenseitenwänden anzukleben.

In Ländern mit strengeren Wintern mit vereisten und schneeigen Fahrbahnen ist es üblich bzw. besteht die gesetzliche Verpflichtung, Kraftfahrzeuge mit speziellen Winterreifen auszurüsten. Die in der wärmeren Jahreszeit gefahrenen Reifen verbleiben meistens auf ihren Felgen und werden als Kompletträder mehrere Monate lang gelagert. Beim Wechsel der Sommer- und Winterräder ist darauf zu achten, dass die vorherige Radposition am Fahrzeug beibehalten wird, insbesondere soll die "normale" Drehrichtung der Reifen beibehalten werden. Dies erfordert eine spezielle Kennzeichnung der Reifen bzw. Räder, insbesondere ist es weit verbreitet, die Reifen mit Kreide per Hand entsprechend zu beschriften.

Dokument EP 1 190 872 A2 offenbart einen gattungsgemäßen Reifen.

Der Erfindung liegt die Aufgabe zugrunde, Fahrzeugluftreifen derart auszuführen, dass die manuelle Beschriftung entfallen kann, indem eine Möglichkeit geschaffen wird, die "richtige" Position von Fahrzeugrädern schnell erkennen zu können, um dem Monteur, der den Radwechsel zwischen Sommer- und Winterrädern vornimmt, die Zuordnung zu erleichtern.

Gelöst wird die gestellte Aufgabe erfindungsgemäß dadurch, dass auf der Reifenseitenwand vier unterschiedliche Kennzeichen angebracht sind, wobei jedes dieser Kennzeichen für eine der vier Radpositionen eines Kraftfahrzeugs steht und wobei der Reifen derart auf der Felge zu montieren ist, dass das betreffende Kennzeichen dem Ventil zugeordnet ist.

Reifen gemäß der Erfindung weisen daher auf ihren Seitenwänden vier unterschiedliche Positionskennzeichen auf, wobei bei der Erstmontage des Reifens auf einer Felge lediglich darauf zu achten ist, dass der Reifen einer bestimmten Radposition zugewiesen wird, indem das dieser Position entsprechende Kennzeichen im Wesentlichen der Ventilposition zugeordnet wird. Das an der Felge montierte Ventil zeigt daher die jeweilige Radposition am Fahrzeug an. Somit entfällt eine gesonderte Kennzeichnung der Räder bzw. Reifen mit Kreide, wenn ein Wechseln der Räder mit Sommerreifen auf solche mit Winterreifen und vice versa durchgeführt wird.

Es erleichtert die Zuordnung der einzelnen vier Kennzeichen zum Ventil an der Felge, wenn die Kennzeichen an der Seitenwand gegeneinander um etwa 90° versetzt angeordnet sind. Auch ein Anbrinen der Kennzeichen in unmittelbarer Nähe des Wulstbereiches ist für eine entsprechende Positionierung des Reifens an der Felge von Vorteil.

Die Kennzeichen können beliebig ausgeführt sein, insbesondere können Sie Zahlen, Buchstaben, Zahlen- und Buchstabenkombinationen sowie beliebige Symbole sein. Bei einer bevorzugten Ausführungsform der Erfindung sind die Kennzeichen Buchstaben oder Buchstabenkombinationen, die eine gedankliche Verbindung zur jeweiligen Radposition gestatten.

Eine gute Erkennbarkeit der Kennzeichen erleichtert die entsprechende Montage des jeweiligen Reifens an der Felge und die Zuordnung des Rades am Fahrzeug. In diesem Zusammenhang ist es günstig, wenn die Kennzeichen mit balken- oder streifenförmig verlaufenden Positionselementen kombiniert sind.

Die Montage eines Satzes von Rädern wird ferner erleichtert, wenn an der Seitenwand ein weiteres Kennzeichen angebracht ist, welches über die Zuordnung der vier Kennzeichen zu den Radpositionen am Fahrzeug informiert.

Die Kennzeichen und die Positionselemente können auf vielfältige Weise ausgeführt sein, wobei auf Haltbarkeit und gute Sichtbarkeit geachtet werden sollte. Vorzugsweise sind daher die vier Kennzeichen, das weitere Kennzeichen und die Positionselemente in die Seitenwand eingeprägte Erhebungen und/oder Vertiefungen. Alternativ dazu können die Kennzeichen und die Positionselemente Gummi- oder Kunststoffteile sein, die ein- oder anvulkanisiert oder am fertigen Reifen aufgeklebt sind.

Weitere Merkmale, Vorteile und Einzelheiten der Erfindung werden nun anhand der Zeichnung, die ein Ausführungsbeispiel darstellt, näher beschrieben. Dabei zeigen

Fig. 1 eine Seitenansicht eines auf einer Felge montierten Fahrzeugluftreifens und

Fig. 2 eine schematische Ansicht (Draufsicht) eines Kraftfahrzeuges.

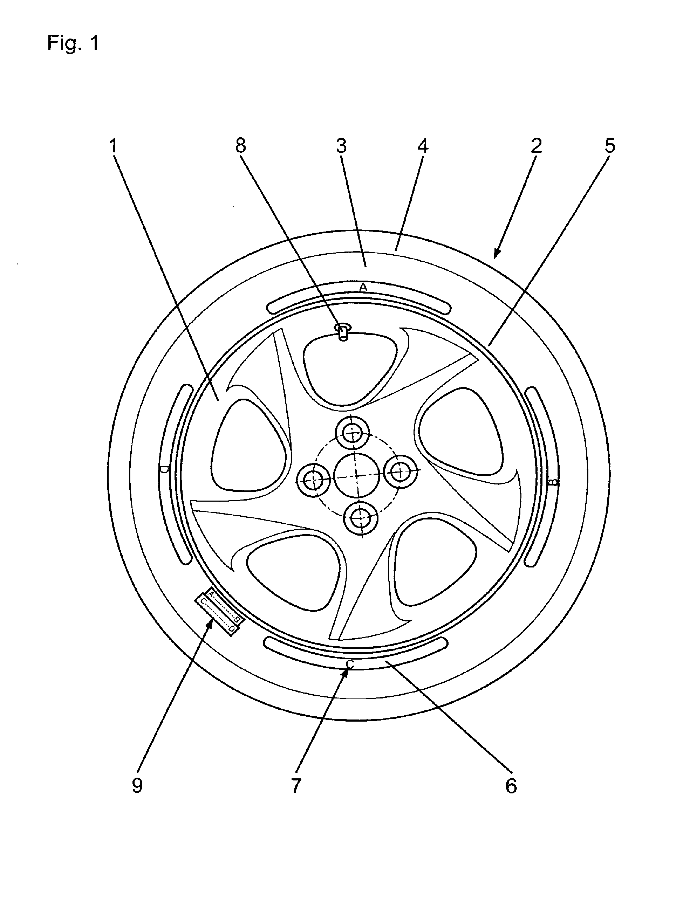

Fig. 1 zeigt eine Felge 1 mit einem auf ihr montierten Fahrzeugluftreifen 2, welcher ein schlauchloser Radialreifen üblicher Bauart, beispielsweise ein Reifen für Personenkraftwagen, ist. Von den Bauteilen des Fahrzeugluftreifens 2 sind in Fig. 1 eine an der gezeigten Reifenseite ringförmig umlaufende Seitenwand 3 gezeigt, an welche außen ein ringförmig umlaufender Auslauf 4 einer Laufstreifenprofilierung und innen ein auf der Felge 1 befindlicher Wulstbereich 5 angrenzt. Auf der Seitenwand 3 sind nicht dargestellte Informationen über den Fahrzeugluftreifen, wie die Reifendimensionsangaben, der Hersteller, die Reifenbezeichnung und dergleichen, angebracht. Diese Zeichen sind als Erhebungen/Vertiefungen in der Reifenseitenwand 3 ausgebildet und werden bei der Vulkanisation des Fahrzeugluftreifens über die die Seitenwand 3 formenden Seitenschalen der Vulkanisationsform, welche durch Fräsen oder mittels Laser entsprechend strukturiert worden sind, auf den Reifen übertragen.

An der Seitenwand 3 sind gemäß der Erfindung vier Positionselemente angebracht. Bei der in Fig. 1 gezeigten Ausführungsform sind die Positionselemente eingeprägte Streifen 6 ― Erhebungen oder Vertiefungen mit einer Höhe/Tiefe, die insbesondere zwischen 0,3 mm und 1,5 mm beträgt. Die vier Streifen 6 sind gegeneinander um 90° versetzt angeordnet, sodass jeweils zwei der Streifen 6 diametral gegenüber liegend positioniert sind. Die Streifen 6 sind ferner in der Nähe des Wulstbereiches 5 angeordnet, sodass sie sich bei montiertem Reifen in unmittelbarer Nähe zum Felgenrand befinden. Die Streifen 6 sind im Wesentlichen konzentrisch zum Umfang der Felge bzw. des Reifens verlaufende Kreisringabschnitte, welche vorzugsweise über einen Kreissektor mit einem Zentriwinkel von einigen wenigen Grad bis zu 60° verlaufen und eine Breite in der Größenordnung von 5 mm bis 10 mm aufweisen. In jedem Streifen 6 ist ein Kennzeichen 7 angebracht, als Erhebung oder Vertiefung, wobei sämtliche Kennzeichen 7 verschieden sind. Diese Kennzeichen 7 können, wie in Fig. 1 gezeigt, die Buchstaben A, B, C und D sein.

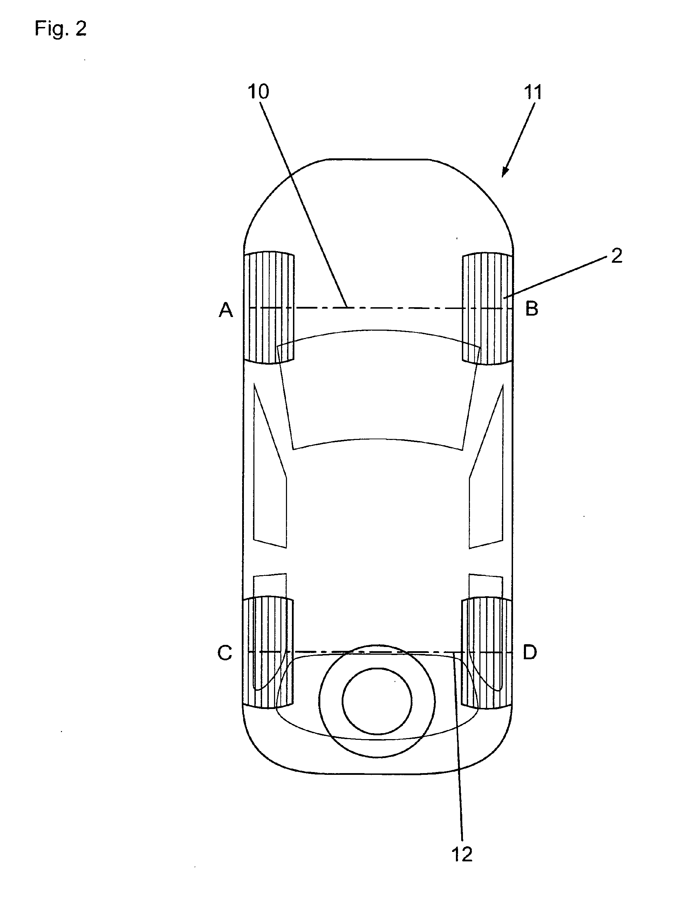

Der Fahrzeugluftreifen 2 wird derart auf der Felge 1 montiert, dass einer der Streifen 6 sich beim Ventil 8, welches auf der Felge 1 angebracht ist, befindet. Insbesondere wird der Streifen 6 im Wesentlichen symmetrisch zum Ventil 8 des Reifens ausgerichtet, sodass der auf diesem Streifen 6 befindliche Buchstabe, bei der in Fig. 1 gezeigten Ausführungsform ist dies der Buchstabe A, beim Ventil 7 positioniert ist. Ein Satz von Fahrzeugluftreifen für einen Personenkraftwagen 11 umfasst vier Räder, von welchen sich, wie Fig. 2 zeigt, zwei an der Vorderachse 10 und zwei an der Hinterachse 12 befinden. Die Streifen 6 mit ihren individuellen Kennzeichen 7 ordnen jeden der vier an einem Fahrzeug positionierten Reifen 2 bzw. jedes Rad einer bestimmten Radposition zu. Bei der in den Figuren gezeigte Ausführungsform ist der Buchstabe A der Radposition links vorne, der Buchstabe B der Radposition rechts vorne, der Buchstabe C der Radposition links hinten und der Buchstabe D der Radposition rechts hinten zugeordnet, jeweils in Fahrtrichtung betrachtet. Die vier Reifen werden derart auf den Felgen 1 montiert, dass jeweils ein anderer der vier Buchstaben der Ventilposition zugeordnet ist. Bei der Montage der Räder wird das Rad mit jenem Reifen 2, dessen Streifen 6 mit dem Buchstaben A dem Ventil 8 zugeordnet ist, links vorne, das Rad mit dem Reifen 2, dessen Streifen 6 mit dem Buchstaben B dem Ventil 8 zugeordnet ist, rechts vorne, das Rad, dessen Reifen 2 mit dem Buchstaben C dem Ventil 8 zugeordnet ist, links hinten und das Rad, dessen Reifen 2 mit dem Buchstaben D dem Ventil 8 zugeordnet ist, rechts hinten montiert. Somit zeigt jeweils das Ventil 8 die entsprechende Radposition an.

Auf den Reifenseitenwänden 3 können beliebige Kennzeichen 7 zur Zuordnung der Reifen zu den Radpositionen am Fahrzeug angebracht werden. So ist es beispielsweise möglich, das Zeichen V_{L} für vorne links, V_{R} für vorne rechts, H_{L} für hinten links und H_{R} für hinten rechts zu verwenden. Zusätzlich kann auf der Reifenseitenwand ein weiteres Kennzeichen 9 angebracht werden, welche die Zuordnung der verwendeten Kennzeichen 7 zur gleichen Fahrzeugachse angibt, wie es beispielsweise in Fig. 1 gezeigt ist.

Die Kennzeichen 7 auf der Reifenseitenwand 3 können auf vielfältige Weise ausgeführt sein. So ist es möglich, lediglich die Kennzeichen 7, beispielsweise die Buchstaben, in die Reifenseitenwand 3 zu prägen und auf besondere sonstige Elemente, wie die Streifen 6, zu verzichten. Möglich ist auch eine Ausführung, bei der die Kennzeichen und die sonstigen ihnen zugeordneten Designelemente Gummi- oder Kunststoffteile, beliebig gefärbt, sind. Diese Gummi- oder Kunststoffteile können bei der Vulkanisation des Reifens einvulkanisiert werden oder am fertigen Reifen auf die Reifenseitenwände aufgeklebt oder anvulkanisiert werden.

### Bezugszeichenliste

- 1 ....................: Felge
- 2 ....................: Reifen
- 3 ....................: Seitenwand
- 4 ....................: Laufstreifenauslauf
- 5 ....................: Wulstbereich
- 6 ....................: Balken, Streifen
- 7 ....................: Zeichen
- 8 ....................: Ventil
- 9 ....................: Kennzeichnung
- 10...................: Vorderachse
- 11...................: Personenkraftwagen
- 12...................: Hinterachse

## Patentansprüche

1. Schlauchloser Fahrzeugluftreifen mit einem Laufstreifen, Wulstbereichen (5) und Seitenwänden (3), vorgesehen zur Montage auf einer mit einem Ventil (8) versehenen Felge (1) und an Kraftfahrzeugen mit vier Radpositionen,
**dadurch gekennzeichnet,**
**dass** auf der Reifenseitenwand (3) vier unterschiedliche Kennzeichen (7) angebracht sind, wobei jedes dieser Kennzeichen (7) für eine der vier Radpositionen eines Kraftfahrzeugs steht und wobei der Reifen (2) derart auf der Felge (1) zu montieren ist, dass das betreffende Kennzeichen (7) dem Ventil (8) zugeordnet ist.

2. Fahrzeugluftreifen nach Anspruch 1, **dadurch gekennzeichnet, dass** die Kennzeichen (7) an der Seitenwand (3) gegeneinander um etwa 90° versetzt angeordnet sind.

3. Fahrzeugluftreifen nach Anspruch 1 oder 2, **dadurch gekennzeichnet, dass** die Kennzeichen (7) an der Seitenwand (3) in unmittelbarer Nähe des Wulstbereiches (5) angebracht sind.

4. Fahrzeugluftreifen nach einem der Ansprüche 1 bis 3, **dadurch gekennzeichnet, dass** die Kennzeichen (7) Buchstaben oder Buchstabenkombinationen sind oder aufweisen.

5. Fahrzeugluftreifen nach einem der Ansprüche 1 bis 4, **dadurch gekennzeichnet, dass** die Kennzeichen (7) mit balken- oder streifenförmig verlaufende Positionselementen kombiniert sind.

6. Fahrzeugluftreifen nach einem der Ansprüche 1 bis 5, **dadurch gekennzeichnet, dass** an der Seitenwand (3) ein weiteres Kennzeichen (9) angebracht ist, welches über die Zuordnung der vier Kennzeichen (7) zu den Radpositionen am Fahrzeug informiert.

7. Fahrzeugluftreifen nach einen der Ansprüche 1 bis 6, **dadurch gekennzeichnet, dass** die vier Kennzeichen (7) und/oder das weitere Kennzeichen (9) und/oder die Positionselemente in die Seitenwand (3) eingeprägte Erhebungen und/oder Vertiefungen sind.

8. Fahrzeugluftreifen nach einem der Ansprüche 1 bis 6, **dadurch gekennzeichnet, dass** die vier Kennzeichen (7) und/oder das weitere Kennzeichen (9) und/oder die Positionselemente ein- oder anvulkanisierte Gummi- oder Kunststoffteile sind.

9. Fahrzeugluftreifen nach einem der Ansprüche 1 bis 6, **dadurch gekennzeichnet, dass** die vier Kennzeichen (7) und/oder das weitere Kennzeichen (9) und/oder die Positionselemente aufgeklebte Gummi- oder Kunststoffteile sind.

## Claims

1. Tubeless pneumatic vehicle tyre with a tread rubber, bead regions (5) and sidewalls (3), intended for fitting on a rim (1) provided with a valve (8) and on motor vehicles with four wheel positions,
**characterized**
**in that** four different markings (7) are provided on the tyre sidewall (3), each of these markings (7) standing for one of the four wheel positions of a motor vehicle and the tyre (2) being intended to be fitted on the rim (1) in such a way that the marking (7) concerned is assigned to the valve (8).

2. Pneumatic vehicle tyre according to Claim 1, **characterized in that** the markings (7) on the sidewall (3) are arranged offset by approximately 90° with respect to one another.

3. Pneumatic vehicle tyre according to Claim 1 or 2, **characterized in that** the markings (7) on the sidewall (3) are provided in the direct vicinity of the bead region (5).

4. Pneumatic vehicle tyre according to one of Claims 1 to 3, **characterized in that** the markings (7) are or comprise letters or combinations of letters.

5. Pneumatic vehicle tyre according to one of Claims 1 to 4, **characterized in that** the markings (7) are combined with positional elements running in the form of bars or strips.

6. Pneumatic vehicle tyre according to one of Claims 1 to 5, **characterized in that** a further marking (9), which provides information on the assignment of the four markings (7) to the wheel positions on the vehicle, is provided on the sidewall (3).

7. Pneumatic vehicle tyre according to one of Claims 1 to 6, **characterized in that** the four markings (7) and/or the further marking (9) and/or the positional elements are elevations and/or depressions stamped into the sidewall (3).

8. Pneumatic vehicle tyre according to one of Claims 1 to 6, **characterized in that** the four markings (7) and/or the further marking (9) and/or the positional elements are vulcanized-in or vulcanized-on rubber or plastic parts.

9. Pneumatic vehicle tyre according to one of Claims 1 to 6, **characterized in that** the four markings (7) and/or the further marking (9) and/or the positional elements are adhesively attached rubber or plastic parts.

## Revendications

1. Pneu de véhicule sans tube comprenant une bande de roulement, des régions de talon (5) et des parois latérales (3), prévues pour le montage sur une jante (1) pourvue d'une valve (8) et sur des véhicules automobiles à quatre positions de roue,
**caractérisé en ce que**
quatre marques différentes (7) sont appliquées sur la paroi latérale du pneu (3), chacune de ces marques (7) correspondant à l'une des quatre positions de roue d'un véhicule automobile et le pneu (2) devant être monté sur la jante (1) de telle sorte que la marque concernée (7) soit associée à la valve (8).

2. Pneu de véhicule selon la revendication 1, **caractérisé en ce que** les marques (7) sont disposées sur la paroi latérale (3) de manière décalée les unes par rapport aux autres d'environ 90°.

3. Pneu de véhicule selon la revendication 1 ou 2, **caractérisé en ce que** les marques (7) sont appliquées sur la paroi latérale (3) à proximité immédiate de la région de talon (5).

4. Pneu de véhicule selon l'une quelconque des revendications 1 à 3, **caractérisé en ce que** les marques (7) sont ou présentent des lettres ou des combinaisons de lettres.

5. Pneu de véhicule selon l'une quelconque des revendications 1 à 4, **caractérisé en ce que** les marques (7) sont combinées à des éléments de position s'étendant en forme de poutres ou de bandes.

6. Pneu de véhicule selon l'une quelconque des revendications 1 à 5, **caractérisé en ce qu'**une marque supplémentaire (9) est appliquée sur la paroi latérale (3), laquelle informe de l'affectation des quatre marques (7) aux positions de roue sur le véhicule.

7. Pneu de véhicule selon l'une quelconque des revendications 1 à 6, **caractérisé en ce que** les quatre marques (7) et/ou la marque supplémentaire (9) et/ou les éléments de position sont des rehaussements et/ou des renfoncements imprimés dans la paroi latérale (3).

8. Pneu de véhicule selon l'une quelconque des revendications 1 à 6, **caractérisé en ce que** les quatre marques (7) et/ou la marque supplémentaire (9) et/ou les éléments de position sont des pièces en caoutchouc ou en plastique incorporées ou surmoulées par vulcanisation.

9. Pneu de véhicule selon l'une quelconque des revendications 1 à 6, **caractérisé en ce que** les quatre marques (7) et/ou la marque supplémentaire (9) et/ou les éléments de position sont des pièces en caoutchouc ou en plastique collées.
